# EUROPÄISCHE PATENTSCHRIFT

(11) **EP 1 462 400 B1**
(45) Veröffentlichungstag und Bekanntmachung des Hinweises auf die Patenterteilung: **11.10.2006**
(21) Anmeldenummer: 04001794.9
(22) Anmeldetag: 28.01.2004
(51) Int. Cl.: B65G 69/00

(54) **Höhenverstellbarer Puffereinrichtung**
Height adjustable buffer arrangement
Dispositif butoir réglable en hauteur

(30) Priorität: 24.03.2003 DE 10313268
(43) Veröffentlichungstag der Anmeldung: 29.09.2004
(73) Patentinhaber: Grunewald, Niclas, 20146 Hamburg (DE)
(72) Erfinder: Grunewald, Niclas, 20146 Hamburg (DE)
(74) Vertreter: Vonnemann, Gerhard

(56) Entgegenhaltungen:
- EP-A- 0 547 428
- US-A- 2 879 985
- US-A- 4 293 969
- US-A- 6 006 389

## Beschreibung

Die Erfindung betrifft einen Anfahrpuffer bestehend aus einem Montagerahmen und einem Pufferblock für eine Verladerampe oder eine Überladebrücke, dessen Pufferblock in der Höhe verstellbar ausgebildet ist, wobei der Pufferblock als ein im wesentlichen horizontaler Rammbalken ausgebildet ist.

Die Beladung von LKW erfolgt an Lagerhäusern fast ausschließlich an Verladerampen, die in etwa die Höhe der Fahrzeugladefläche haben sollten. Auch sind Überladebrücken bekannt, die eine Anpassung zwischen Verladerampe und Fahrzeugladefläche ermöglichen.

Aus dem deutschen Gebrauchsmuster DE 92 01 381 U1 ist ein Anfahrpuffer für Rampen bekanntgeworden, der sich den Auf- und Abwärtsbewegungen des Fahrzeuges beim Be- und Entladen anpaßt und so Schäden am Puffer und dessen Befestigung verhindert. In der Ruhestellung, d. h. der Normalstellung, befindet sich dieser Puffer auf Rampenhöhe und kann nunmehr von einem LKW mit nach oben oder mit nach unten genommen werden. Eine Einstellung des Puffers in einer Höhe über der Rampe oder unter die Rampe ist bei dieser bekannten Anordnung nicht möglich.

Es kommt jedoch immer wieder vor, daß die Rampenhöhe deutlich niedriger ist als die Höhe der Fahrzeugladefläche, was zur Folge hat, daß das Fahrzeug die Rampenkante überfährt und dadurch unter Umständen Tor und Fassade des Gebäudes beschädigt oder auch Schäden am Fahrzeug auftreten können. Um dies zu vermeiden, schlägt die deutsche Patentschrift DE 195 48 121 vor, daß der Pufferblock in der Ausgangslage über die Oberfläche der Verladerampe oder Überladebrücke einstellbar ist.

Ein solcher Anfahrpuffer, der über die Kante der Rampe oben vorsteht, steht beim Öffnen der LKW-Tür störend im Wege. Da der Pufferblock also beim Verladen stört, muß er abgesenkt werden, so daß seine Oberkante mit der Rampenhöhe abschließt und den Ladevorgang nicht mehr behindern kann.

Nur unzureichend gelöst und damit nachteilig ist nach dem Stand der Technik das Problem, das sich beim Absenken des Puffers stellt, wenn ein LKW den Puffer unter Last hält. Im Stand der Technik kann der Puffer unter Druck durch das angefahrene Fahrzeug nur abgesenkt werden, wenn durch Entfernen eines Keils oder Umlegung eines Exzenters Spiel in die Führung gebracht wird, um so eine Absenkung zu ermöglichen.

Es kommt aber auch vor, dass die Ladefläche andockender LKW niedriger als die Höhe der Rampenkante ist. In solchen Fällen sollten auch Fahrzeug und Gebäude vor Schäden beim Andocken geschützt werden können. Aus der EP-A1-0 547 428 ist ein gattungsbildender Rammbalken für andockende Fahrzeuge bekannt, der höhenverstellbar an den Enden von senkrechten Führungsmitteln gehalten ist. Um Schäden bei schräg auf den Rammbalken einwirkenden Kräften beim Andocken von Fahrzeugen auszuschließen, sind die Führungsmittel oberhalb und unterhalb des Rammbalkens gehalterte, straffe Seile, deren Halterung elastisch nachgiebig sein kann.

Weitere Anfahrpuffer sind in der US-A-4,293,969 beschrieben.

Eine besondere Problematik stellt sich, wenn zur Montage eines Anfahrpuffers aus besonderen Gründen, z.B. bei temperaturgeführten Logistikketten wie an Kühlhäuser, keine Gebäudewand zur Verfügung steht.

Es besteht jedoch das dringende Bedürfnis, den gesamten Verladevorgang auch bei unterschiedlichen Bausituationen zu automatisieren.

Aufgabe der vorliegenden Erfindung ist es deshalb, eine Rammbalkenkonstruktion anzugeben, die die Produktivität des Warenumschlages an Gebäudeöffnungen erhöht.

Diese Aufgabe wird bei einem gattungsgemäßen Anfahrpuffer dadurch gelöst, dass der Rammbalken im Bereich seiner Enden an den zwei beabstandeten, als Säulen ausgebildeten Montagerahmen höhenverstellbar gelagert ist, und die Säulen an ihrem unteren Ende auf oder in der Verkehrsfläche befestigt sind und im Bereich ihres oberen Endes durch einen Stützbalken nach hinten abgestützt ausgebildet sind, der seinerseits vorzugsweise auf der Verkehrsfläche und/oder an einem Gebäudefundament befestigt ist.

Die auftretenden Anfahrkräfte lassen sich mit Vorteil unabhängig von einem Gebäudefundament dadurch ableiten, dass die Säulen an ihrem unteren Ende auf der Verkehrsfläche befestigt sind.

Zusätzliche strukturelle Stabilität wird dadurch erreicht, dass die Säulen im Bereich ihres oberen Endes durch einen Stützbalken nach hinten abgestützt ausgebildet sind, der seinerseits vorzugsweise auf der Verkehrsfläche und/oder an einem Gebäudefundament befestigt ist.

Aufgrund der Anordnung der Anfahrkissen auf einem, zwei Montagerahmen miteinander verbindenden, Rammbalken wird mit großem Vorteil sowohl die bauliche Unabhängigkeit als auch die Umgehung manueller Hilfe bei der Höhenverstellbarkeit unter Druck erreicht. Vorteilhafterweise dient der Rammbalken in seiner Ruheposition oberhalb einer Brückenplatte der Überladebrücke gleichzeitig als Abrollsicherung für auf der Brückenplatte befindliche Ladegeräte wie Gabelstapler, so dass die Betriebssicherheit erhöht wird. Gleichzeitig kann auf diese Weise auf eine zusätzliche aufwendige und teure Abrollsicherung verzichtet werden. Dadurch, dass mindestens ein Anfahrkissen auf einem im wesentlichen horizontalen Rammbalken angeordnet ist, der an einem Montagerahmen höhenverstellbar gelagert ist, ist die Betriebssicherheit der Überladebrücke auch in denjenigen Fällen gewährleistet, wo die Brückenplatte die gesamte Breite eines Lastkraftwagens überspannt und die bekannten Anfahrpuffer wirkungslos sind. Der Rammbalken als kontinuierliche Sicherung schützt auch in diesen Fällen die Überladebrücke und das Gebäude vor Beschädigungen.

Dies gilt insbesondere, wenn auch der Rammbalken einen Verstellweg aufweist, der sowohl eine horizontale als auch eine vertikale Stellwegkomponente aufweist. Die horizontale Stellwegkomponente dient zum Entlasten des Anfahrpuffers. Die vertikale Stellwegkomponente erlaubt die Höhenverstellung.

In Ausgestaltung der Erfindung ist vorgesehen, daß der Anfahrpuffer, d. h. der Pufferblock oder der Rammbalken, einen aufwärts gerichteten Verstellweg aufweist, der sich vom abwärts gerichteten Verstellweg unterscheidet.

Mit Vorteil ist in weiterer Ausgestaltung der Erfindung vorgesehen, daß der aufwärts gerichtete Verstellweg auf mindestens einem Teil des Weges einen größeren Abstand zur Montageebene aufweist, als der abwärts gerichtete Verstellweg. Dies ermöglicht eine eindeutige Schaltfolge der Verfahrwege den Antriebselementen zuzuordnen. Beim Hochfahren wird dann erst die horizontale nach außen gerichtete Stellwegkomponente durchfahren bevor die vertikale Verstellung erfolgt. Beim Runterfahren wird ebenfalls zuerst die horizontale aber nach innen gerichtete Stellwegkomponente durchfahren und dadurch ggf. der Pufferblock entlastet, bevor der Pufferblock nach unten in seine untere Endlage bewegt wird. Bei der alternativen Ausführung mit einem Rammbalken bilden zwei an den Enden des Rammbalkens vorgesehene Pufferblöcke eine Baueinheit mit dem Rammbalken, so dass dann der Rammbalken in diesem Sinne als Synonym für den Pufferblock steht.

Wenn in einer Weiterbildung der Erfindung ein Exzenter, vorzugsweise ein Doppelexzenter, zur Erzeugung mindestens eines Teils der horizontalen Stellwegkomponente vorgesehen ist, wobei der Stellantrieb den Exzenter erst beim Verlassen der oberen Endlage als erstes betätigend ausgebildet ist, kann aufgrund der mechanischen Übertragungsverhältnisse der Stellantrieb vorteilhaft klein dimensioniert werden.

Alternativ kann in einer Weiterbildung der Erfindung ein zweiter Kolben-Zylinder-Antrieb zur Erzeugung mindestens eines Teils der horizontalen Stellwegkomponente vorgesehen ist, wobei vorzugsweise die Steuerung den zweiten Kolben-Zylinder-Antrieb beim Verlassen der oberen Endlage als erstes betätigend ausgebildet ist.

Als weitere alternative Ausgestaltung der Erfindung ist es vorteilhaft, wenn eine Auflaufkeilkombination zur Erzeugung mindestens eines Teils der horizontalen Stellwegkomponente vorgesehen ist, wobei vorzugsweise der Stellantrieb die Auflaufkeilkombination beim Verlassen der oberen Endlage als erstes betätigend ausgebildet ist.

Schließlich kann es bei einer weiteren alternativen Ausgestaltung der Erfindung vorteilhaft sein, wenn eine Parallelogrammführung mit Schubstange zur Erzeugung mindestens eines Teils der horizontalen Stellwegkomponentevorgesehen ist, wobei vorzugsweise der Stellantrieb die Parallelogrammführung mit Schubstange beim Verlassen der oberen Endlage als erstes betätigend ausgebildet ist.

Die Maßnahme, daß der Montagerahmen feststehend ausgebildet ist und eine Führungsschablone aufweist, an der sich zwei vertikal beanstandete veränderbare Stützflächen einer lageveränderlichen Baugruppe abstützen, erlaubt eine vorteilhafte direkte Einleitung auftretender Stoßkräfte in den Baukörper und eine besonders robuste Ausführung.

Demselben Zweck dienend ist vorgesehen, daß die lageveränderliche Baugruppe aus dem Anfahrpuffer und einem Teil des Linearantriebs gebildet ist, wobei vorzugsweise eine Stützfläche oder beide am Pufferblock angeordnet sind. Die auftretenden Pufferkräfte werden über diese definierten Stützflächen, die entsprechend groß und vorzugsweise eben ausgebildet sind, in den Montagerahmen eingeleitet. Der Stellantrieb bleibt vorteilhaft verschont von diesen Kräften.

Die Funktionssicherheit wird noch dadurch erhöht, daß der Pufferblock eine Mitnahmeöffnung aufweist, die in vertikaler Richtung größer als in horizontaler Richtung ausgebildet ist und in der ein Mitnahmeelement eingreifend angeordnet ist, das eine Verbindung zum beweglichen Teil des Stellantriebs aufweist. Die Entlastung des Puffers wird dadurch erleichtert.

Der Pufferblock kann vorteilhaft weit über die obere Rampenkante hinausragen, weil eine Stützfläche als Drehmomentsstütze einer auf den Pufferblock ausgeübten Anfahrkraft ausgebildet ist.

Es entsteht nämlich durch die Anfahrkräfte dadurch, daß der Pufferblock eine Stoßfläche aufweist, deren Mitteachse oberhalb der Mitnahmeöffnung angeordnet ist, ein Moment um eine horizontale Achse, das auf diese konstruktiv günstige Weise in den Baukörper über den Montagerahmen eingeleitet wird.

Der Anfahrpuffer stört den Verladebetrieb nicht, wenn der Montagerahmen unterhalb der Mittelachse der Stoßfläche endend ausgebildet ist. Dann kann nämlich beim Verladen der Pufferblock weit genug nach unten aus dem sonst störenden Bereich herausgefahren werden.

Wenn der Antrieb des Anfahrpuffers eine Wirkverbindung zu einer Steuerung aufweist, der das Signal eines Sensor zur Erkennung eines herangefahrenen Fahrzeugs aufgeschaltet ist, kann die Bedienung des Puffers vorteilhaft automatisiert werden. Die Steuerung fährt den Anfahrpuffer aus dem störenden Bereich heraus, sobald der Sensor die Anwesenheit eines Fahrzeugs signalisiert und beispielsweise zusätzlich eine Zeitspanne abgelaufen ist.

In speziellen Fällen, bei denen der Anfahrpuffer unterhalb der Rampenkante von einem herangefahrenen Fahrzeug belastet wird, kann es von Vorteil sein, wenn der Kolben-Zylinder-Antrieb des Anfahrpuffers eine Betriebsart aufweist, bei der die beiden Druckräume des Kolben-Zylinder-Antriebs miteinander verbunden sind. Beim Entladen des Fahrzeugs kann dann nämlich der belastete Anfahrpuffer vom Fahrzeug mit nach oben genommen werden, ohne auf den Antrieb Zwang auszuüben.

Weitere vorteilhafte Ausgestaltungen sind in den Ansprüchen 17 und 18 beschrieben.

Die Anfahrpuffer lassen sich auch vorteilhaft aus dem Schwenkbereich der LKW-Hintertür bewegen, wenn der Abstand der Säulen größer als der Abstand der Anfahrkissen ist, vorzugsweise größer als die doppelte Breite eines LKW.

In Ausgestaltung der Erfindung ist vorgesehen, dass er ein Dichtungsteil, vorzugsweise verstellbares, insbesondere aufblasbares, aufweist, wobei das Dichtungsteil einen Spalt zwischen dem Rammbalken und der Überladebrücke überbrückend ausgebildet ist. Auf diese Weise wird beim Be- oder Entladen in Fällen einer temperaturempfindlichen Logistikkette ein sicherer Abschluß gegenüber der Außenluft erreicht, so dass keine Luftfeuchtigkeit auf der Überladebrücke kondensieren oder ausfrieren und damit den sicheren Einsatz von beispielsweise Gabelstaplern oder Niederflurhubwagen gefährden kann. Einfach und robust lässt sich das Dichtungsteil gestalten, wenn das Dichtungsteil aufblasbar ausgebildet ist. Ein solches Dichtungsteil passt sich mit Vorteil auch an Anbauten eines Fahrzeuges an, so dass es besonders gut dichtet und das Fahrzeug nicht beschädigt. Durch die Aufblasbarkeit kann sich das Dichtungsteil hervorragend an betriebs- und fahrzeugbedingte unterschiedliche Abstände zwischen Rammbalken und Fahrzeug/Überladebrücke anpassen, wobei zusätzliche mechanische Antriebe nicht erforderlich sind, da das Dichtungsmaterial durch die einströmende Luft in die dem Zuschnitt entsprechende Form gedrückt wird.

Diese Sicherheit wird noch dadurch erhöht, daß das Dichtungsteil in der Aufsicht u-förmig ausgebildet ist und/oder vorzugsweise mit seinen freien Schenkeln in Richtung der Anfahrkissen zeigend ausgebildet ist. Das Dichtungsteil schmiegt sich so noch besser an ein Fahrzeug an. Auch dadurch, dass das Dichtungsteil die gesamte Breite der Überladebrücke und etwas darüber überspannt, dichtet sie auch über die seitlichen Kanten der Überladebrücke hinaus.

Die Erfindung wird in einer bevorzugten Ausführungsform unter Bezugnahme auf eine Zeichnung beschrieben, wobei weitere vorteilhafte Einzelheiten den Figuren der Zeichnung zu entnehmen sind. Funktionsmäßig gleiche Teile sind dabei mit denselben Bezugszeichen versehen.

Die Figuren der Zeichnung zeigen im einzelnen:
- Figur 1: eine Seitenansicht des erfindungsgemäßen Anfahrpuffers in der Anfahrsituation durch einen LKW,
- Figur 2: eine Seitenansicht des erfindungsgemäßen Anfahrpuffers in der Verladesituation des LKWs,
- Figur 3: eine schematische Schnittdarstellung einer Seitenansicht des erfindungsgemäßen Anfahrpuffers in der Betriebsposition,
- Figur 4: eine schematische Schnittdarstellung einer Seitenansicht des erfindungsgemäßen Anfahrpuffers in der Anfahrsituation für einen LKW,
- Figur 5: eine schematische Darstellung des Verstellweges des erfindungsgemäßen Anfahrpuffers,
- Figur 6: eine schematische Darstellung einer Aufsichtsicht des erfindungsgemäßen Anfahrpuffers,
- Figur 7a: eine schematische Schnittdarstellung einer Seitenansicht des erfindungsgemäßen Anfahrpuffers mit Auffahrkeilkombination in der Betriebsposition,
- Figur 7b: eine schematische Schnittdarstellung einer Seitenansicht des erfindungsgemäßen Anfahrpuffers mit Auffahrkeilkombination in der Anfahrposition,
- Figur 8a: eine schematische Schnittdarstellung einer Seitenansicht des erfindungsgemäßen Anfahrpuffers mit zweitem Kolben-Zylinder-Antrieb in der Betriebsposition,
- Figur 8b: eine schematische Schnittdarstellung einer Seitenansicht des erfindungsgemäßen Anfahrpuffers mit zweitem Kolben-Zylinder-Antrieb in der Anfahrposition,
- Figur 9: einen Vertikalschnitt durch eine alternative Ausgestaltung mit Pufferkissen auf einem Rammbalken,
- Figur 10: eine frontale Ansicht der Ausgestaltung gemäß Figur 11 und
- Figur 11: eine Aufsicht auf die Ausgestaltung gemäß Figur 11.

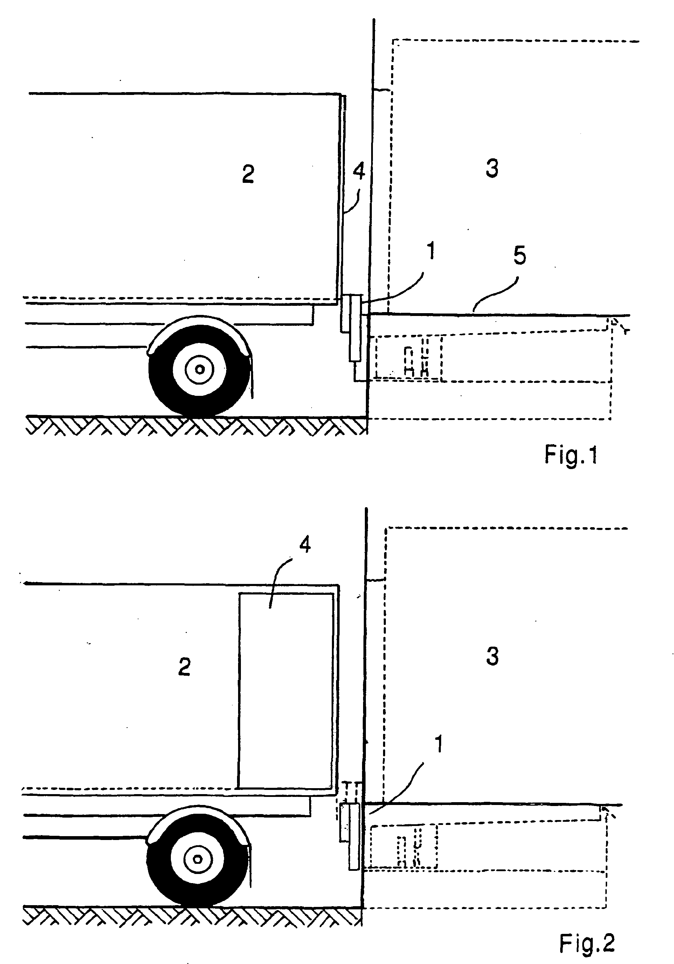

In den Figuren 1 und 2 bezeichnet 1 den erfindungsgemäßen Anfahrpuffer, der zwischen einem LKW 2 und einem Gebäude 3 angeordnet ist. Die Figur eines zeigt dabei eine Situation, in der der LKW mit geschlossenen Türen 4 zunächst an den Anfahrpuffer 1 herangefahren ist. Die obere Kante des Anfahrpuffers ist dabei so positioniert, daß sie über das Niveau der Rampenkante 5 hinausragt. Der Anfahrpuffer hat dabei eine Höhe, die ausreicht, daß die Aufbauten gegen den Puffer gefahren werden können. Zum Öffnen der Türen 4 ist der Puffer jedoch im Wege. Deshalb wird der Puffer dann in die Betriebsposition gefahren, die in Figur 2 dargestellt ist. In dieser Lage kollidiert der Puffer nicht mehr mit den zu öffnenden Türen.

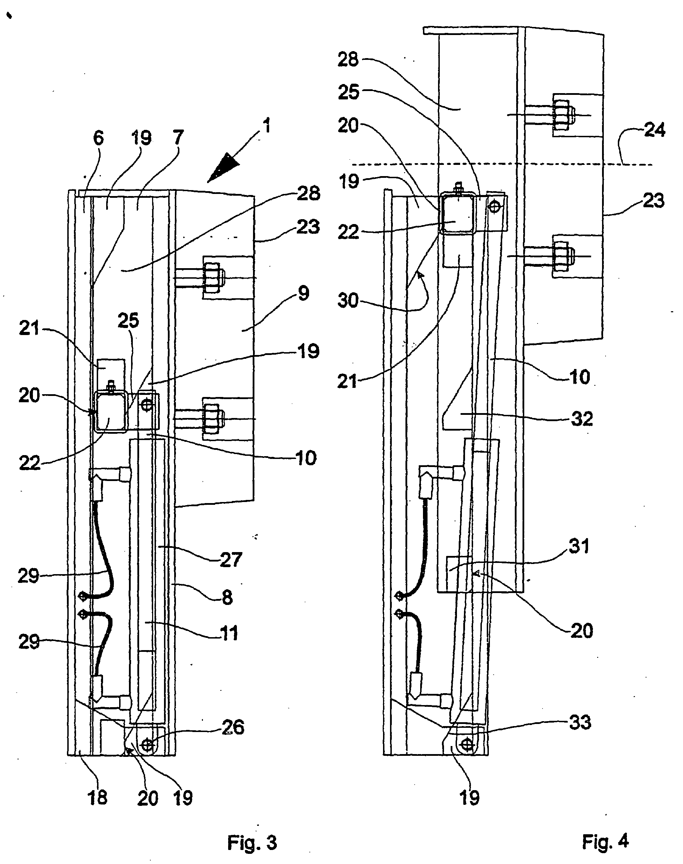

Die Konstruktion des erfindungsgemäßen Puffers ist in Figur 3 als Vertikalschnitt dargestellt. Der Anfahrpuffer 1 besteht im wesentlichen aus einer festen Baugruppe 6 und einer beweglichen Baugruppe 7.

Zur beweglichen Baugruppe gehört ein Pufferblock 8, an dem das Anfahrkissen 9 angebracht ist. An dem Pufferblock 8 ist zur Bewegung desselben die Kolbenstange 10 eines Kolben-Zylinder-Antriebs 11 mittels einer Verbindung 25 schwenkbar befestigt. Dieser Stellantrieb 11 stützt sich auf der anderen Seite über das Schwenklager 26 des Zylinders 27 an dem Montagerahmen 18 ab, mit dem der Stellantrieb 11 schwenkbar verbunden ist, die die feststehende Baugruppe 6 bilden.

Zur Führung der Verstellbewegung ist am Montagerahmen 18 eine Führungsschablone 19 angeschweißt, die aus mehreren einzelnen Elementen besteht. Die Schablone 19 führt ein Mitnahmeelement 22, daß in die Mitnahmeöffnung 21 einer am Pufferblock 8 angeschweißten Platte 28 eingreift. Das Mitnahmeelement 22 wird über die Verbindung 25 von der Kolbenstange 10 bewegt.

Um aus der in Figur 3 dargestellten Positionen in die Anfahrt-Positionen gemäß Figur 4 zu fahren, wird der Zylinder 27 zunächst über die Hydraulikschläuche 29 mit hydraulischer Flüssigkeit gespeist. Die Kolbenstange 10 fährt darauf aus und bewegt über Verbindung 25 das Mitnahmeelement in der Mitnahmeöffnung 21 solange in vertikale Richtung, bis das Mitnahmeelement 22 an der oberen Kante der Mitnahmeöffnung 21 anliegt. Erst dann bewegt sich auch der Pufferblock 8 zunächst vertikal nach oben, bis das Mitnahmeelement auf die Schräge 30 der Führungschablone 19 trifft. Die Schablone 19 drängt das Mitnahmeelement nach außen, bis die Kolbenstange 10 ihre obere Endlage erreicht hat. In dieser Endlage stützt sich das Mitnahmeelement 22 auf der Stützfläche 20 der Schablone 19 ab.

Da die Mittelachse 24 der Stoßfläche 23 oberhalb des Mitnahmeelementes 22 angeordnet ist, wird auf den Pufferblock 8 bei einem Stoß in Richtung der Mittelachse 24 ein Moment um die Achse des Mitnahmeelementes 22 ausgeübt. Um diese Kräfte aufzunehmen, ist an dem Pufferblock 8 eine Drehmomentstütze 31 vorgesehen, die sich an eine vertikal von der oben beschriebenen Stützfläche 20 beanstandeten weiteren Stützfläche 20 anlegt.

Das Einfahren des Anfahrpuffers aus der in Figur 4 dargestellten Positionen in die gemäß Figur 3 gezeigten Lage erfolgt analog. Zunächst bewegt sich wiederum das Mitnahmeelement 22 innerhalb der Mitnahmeöffnung 21. Erst dann bewegt sich auch der Pufferblock 8 vertikal nach unten. Sobald das Mitnahmeelement 22 auf die Schräge 32 und die Drehmomentstütze 31 auf die Schräge 33 stößt, wird der Pufferblock 8 den Schrägen 32 und 33 folgend wieder in Richtung auf den Montagerahmen 18 gedrängt, bis die in Figur 3 gezeigte Lage erreicht ist.

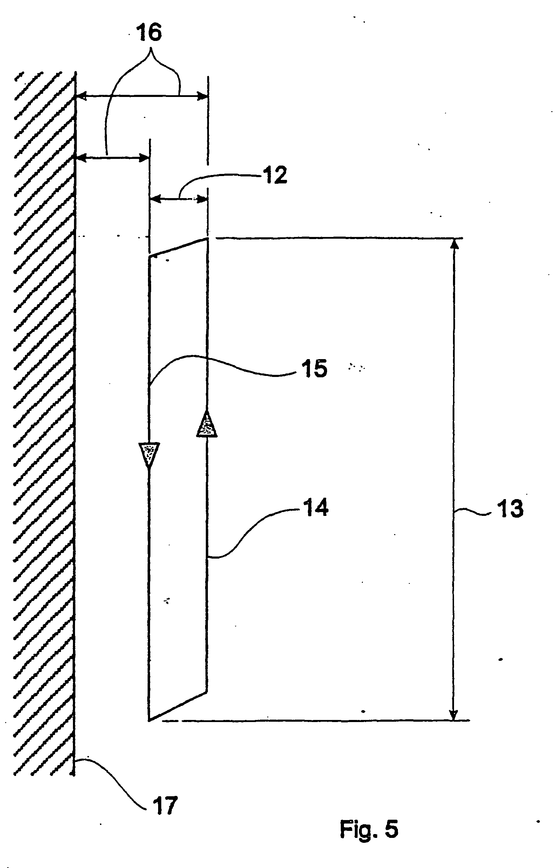

In Figur 5 ist der Verstellweg aus der Seitenansicht noch einmal anschaulich dargestellt. Der aufwärts gerichtete Verstellweg 14 weist einen größeren Abstand 16 zur Montageebene 17 des Anfahrpuffers auf, als der abwärts gerichtete Verstellweg 15. Die horizontale Stellwegkomponente 12 ist aber wesentlich geringer als die vertikale Stellwegkomponente 13. Der Verstellweg kann je nach Erzeugungsweise der horizontalen Wegkomponente etwas unterschiedlich gestaltet sein. Alternative Antriebskonzepte sind weiter unten beschrieben.

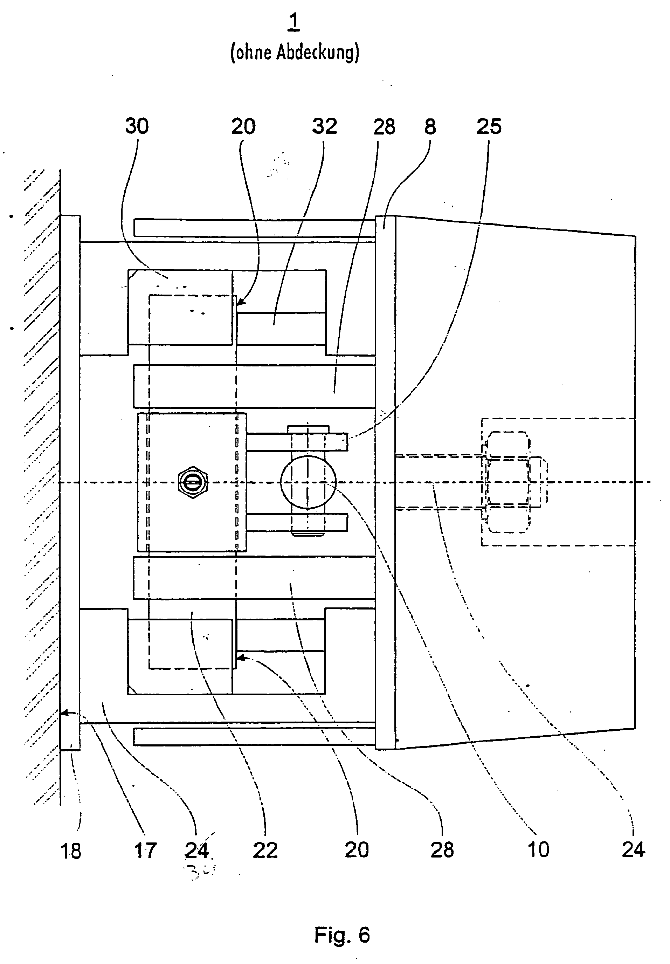

Eine Aufsicht auf den erfindungsgemäßen Anfahrpuffer ist in Figur 6 in seiner unteren Lage dargestellt. In dieser Lage stützt sich der Pufferblock 8 über die U-förmigen Seitenteile 34 und den Montagerahmen 18 auf der Montageebene 17 ab. In der oberen Lage des Anfahrpuffers 1 stützt sich der Pufferblock 8 über die Platte 28 und das Mitnahmeelementes 22 auf der Stützfläche 20 ab.

Bei einer Ausführung des Anfahrpuffers ist die horizontale Komponente mittels eines Doppelexzenterantriebs verwirklicht. Beim Ausfahren der Kolbenstange 10 wird zunächst eine elliptische Scheibe um eine Drehachse gedreht, bis ein Bolzen gegen einen Anschlag trifft. Anschließend fährt der Pufferblock 8 nach oben. Das Herunterfahren geschieht in umgekehrter Reihenfolge. Die elliptische Scheibe wirkt wie ein Hebel um die Drehachse.Sie kann jedoch auch als Exzenter ausgebildet sein, bei dem der gespiegelte Teil zum Doppelexenter fehlt.

Bei einer Ausgestaltung des Anfahrpuffers ist die horizontale Komponente mittels einer Parallelogrammführung mit Schubstange verwirklicht. Beim Ausfahren der Kolbenstange 10 wird zunächst die Parallelogrammführung von der Schubstange um die Schwenkachsen geschwenkt, bis Führungsstangen der Parallelogrammführung gegen geeignete Anschläge treffen. Dabei bewegt sich der Pufferblock 8 nach außen. Anschließend fährt der Pufferblock 8 nach oben. Das Herunterfahren geschieht in umgekehrter Reihenfolge.

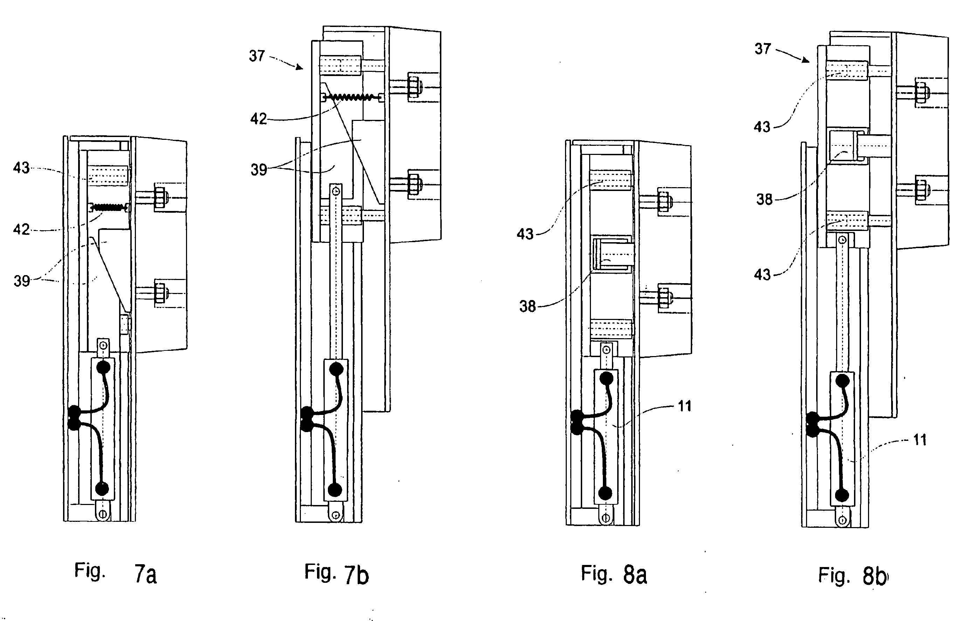

In den Figuren 7a und 7b ist eine Ausgestaltung des Anfahrpuffers dargestellt, bei der die horizontale die Komponente mittels einer Auffahrkeilkombination 39 verwirklicht ist. Beim Ausfahren der Kolbenstange 10 wird zunächst der Pufferblock 8 nach oben bewegt, bis er gegen geeignete Anschläge fährt. Anschließend fährt die Kolbenstange 10 so lange weiter aus, bis die Keile der Auffahrkeilkombination 39 gegen die Kraft der Feder 42 den Pufferblock 8 nach außen drücken. Das Herunterfahren geschieht in umgekehrter Reihenfolge.

In den Figuren 8a und 8b ist eine Ausgestaltung des Anfahrpuffers dargestellt, bei der die horizontale die Komponente mittels eines zweiten Kolben-Zylinder-Antriebs 38 verwirklicht ist. Zunächst wird der Kolben-Zylinder-Antrieb 38 von der Steuerung mit Druckmittel beaufschlagt. Dabei bewegt sich der Pufferblock 8 nach außen. Anschließend der Kolben-Zylinder-Antrieb 11. Dadurch fährt der Pufferblock 8 nach oben. Das Herunterfahren geschieht in umgekehrter Reihenfolge. Die beiden Zylinder der Antriebe können auch an einer gemeinsamen Druckmittelversorgung angeschlossen sein. Je nach Dimensionierung der Kolben und der Reibverhältnisse fahren dann die Kolben in unterschiedlicher Folge ein oder aus. Die Betätigungsfolge kann aber auch durch die Steuerung willkürlich vorgegeben werden.

Die den horizontalen Stellweg erzeugenden Komponenten der oben beschriebenen Antriebe werden vorzugsweise relativ zueinander durch geeignete horizontale Linearführungen 43 beispielsweise in Form von Buchsen und Stangen innerhalb des Pufferblocks 8 geführt.

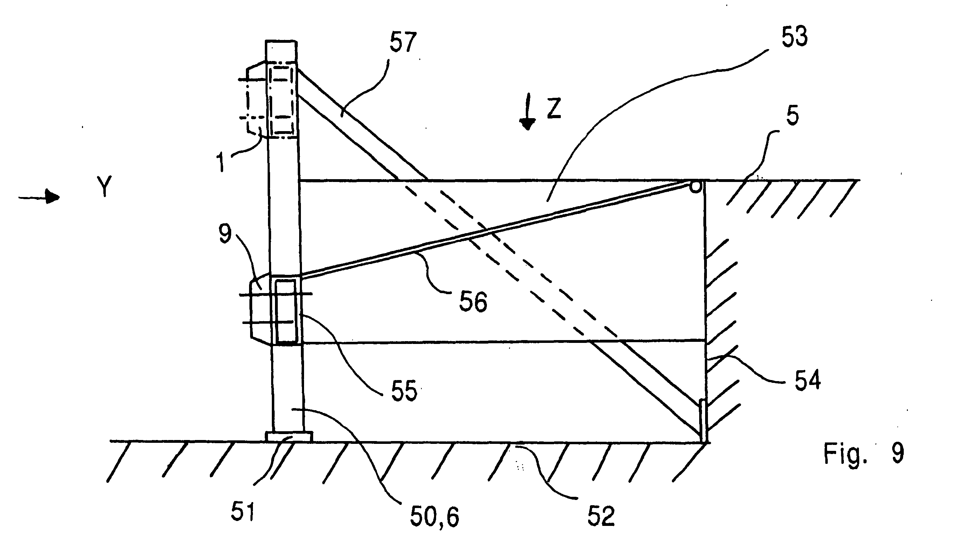

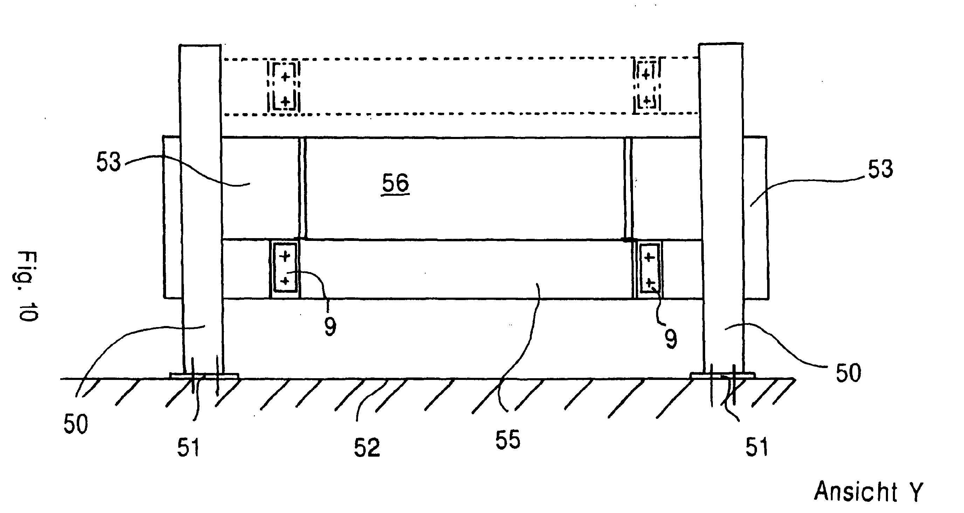

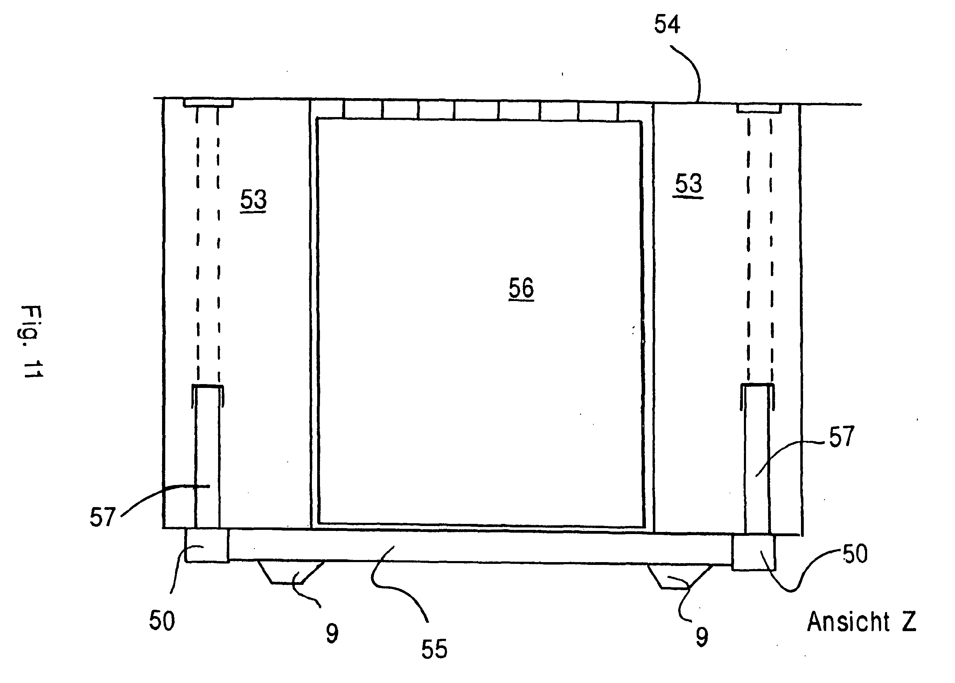

In Figur 9, 10 und 11 ist eine bevorzugte Ausgestaltung als Vertikalschnitt, Frontansicht und Aufsicht dargestellt. Zur Trennung der Ladebucht vom Gebäude, beispielsweise bei einem Kühlhaus, ist eine bekannte Überladebrücke 56 in einem Podest 53 eingebaut. In der Ruhelage ist die Überladebrücke nach unten geneigt eingestellt. Das Podest 53 kann man sich auch von einer nicht dargestellten Thermoschleuse umbaut denken. Ein der Übersichtlichkeit wegen ebenfalls nicht dargestelltes Rolltor kann dabei bis auf die Überladebrücke abgesenkt sein. Zum Schutze des Tores, der Überladebrücke und/oder des Podestes 53 ist vor dem Podest zwischen zwei Stützen 50 ein Rammbalken 55 angeordnet, auf dem zwei Anfahrkissen 9 befestigt sind.

Die Anfahrkissen 9 sind so auf dem höhenverstellbaren Rammbalken angeordnet, dass sie sich seitlich der Überladebrücke befinden. Der Rammbalken selbst ist mit seinen Enden in bzw. an den Säulen 50 auf die weiter oben beschriebene Weise höhenverstellbar gelagert. Die Säulen haben einen Abstand, der Vorzugsweise das Doppelte der LKW-Breite beträgt. Die Säule 50 ist mittels eines Flansches als Fuß 51 mit einem in der Verkehrsfläche 52 vorgesehenen Fundamt verschraubt. Zusätzlich wird das obere Ende der Säule nach hinten von einem schräg nach unten verlaufenden Stützbalken 57 gegen das Gebäudefundament oder auf dem Niveau der Verkehrsfläche abgestützt. Die beim Anfahren der Konstruktion auftretenden Anfahrkräfte können so getrennt vom Podest oder von der Gebäudekonstruktion in eine geeignete Fundamentierung geleitet werden.

Üblicherweise steht der Rammbalken beim Andocken eines LKW in seiner oberen Ruhelage. Die Überladebrücke ist dann in ihrer unteren Ruhelage. In dieser Lage bildet der Rammbalken eine Überrollsicherung für auf der Überladebrücke befindliche Ladegeräte wie Gabelstapler. Anschließend wird das Tor geöffnet und der Rammbalken in seine untere Position gefahren. Die LKW-Tür kann dann ohne störende Puffer geöffnet werden sowie die Plattform der Überladebrücke angehoben und auf die Ladefläche des LKW aufgelegt werden. Sollte die Überladebrücke die gesamte Breite eines LKW überspannen, so verhindert der kontinuierliche und breiter als die Gesamtbreite des LKW ausgebildete Rammbalken eine Beschädigung der Überladebrücke.

Auf diese Weise ist ein vorteilhaft robuster Anfahrpuffer geschaffen worden, der auch unter Druck von einem relativ klein ausgelegten Antrieb in eine nicht störende Betriebsstellung gefahren werden kann.

### BEZUGSZEICHENLISTE

- 1.: Anfahrpuffer
- 2.: LKW
- 3.: Gebäude
- 4.: Tür
- 5.: Rampenkante
- 6.: feste Baugruppe
- 7.: bewegliche Baugruppe
- 8.: Pufferblock
- 9.: Anfahrkissen
- 10.: Kolbenstange
- 11.: Kolben-Zylinder-Antrieb
- 12.: horizontale Stellwegkomponente
- 13.: vertikale Stellwegkomponente
- 14.: aufwärts gerichteter Verstellweg
- 15.: abwärts gerichteter Verstellweg
- 16.: Abstand
- 17.: Montageebene
- 18.: Montagerahmen
- 19.: Führungsschablone
- 20.: Stützfläche
- 21.: Mitnahmeöffnung
- 22.: Mitnahmeelement
- 23.: Stoßfläche
- 24.: Mittelachse
- 25.: Verbindung
- 26.: Schwenklage
- 27.: Zylinder
- 28.: Platte
- 29.: Hydraulikschlauch
- 30.: Schräge
- 31.: Drehmomentstütze
- 32.: Schräge
- 33.: Schräge
- 34.: Seitenteil
- 35.:
- 36.:
- 37.: obere Endlage
- 38.: zweiter Kolben-Zylinder-Antrieb
- 39.: Auffahrkeilkombination
- 40.:
- 41.:
- 42.: Feder
- 43.: Linearführung
- 44.: Langloch
- 45.:
- 46.:
- 47.:
- 48.:
- 49.:
- 50.: Säule
- 51.: Fuß
- 52.: Verkehrsfläche
- 53.: Podest
- 54.: Gebäudewand
- 55.: Rammbalken
- 56.: Überladebrücke
- 57.: Stützbalken

## Patentansprüche

1. Anfahrpuffer bestehend aus einem Montagerahmen und einem Pufferblock für eine Verladerampe oder eine Überladebrücke, dessen Pufferblock in der Höhe verstellbar ausgebildet ist, wobei der Pufferblock als ein im wesentlichen horizontaler Rammbalken ausgebildet ist, **dadurch gekennzeichnet, dass** der Rammbalken im Bereich seiner Enden an den zwei beabstandeten, als Säulen ausgebildeten Montagerahmen höhenverstellbar gelagert ist, und die Säulen (50) an ihrem unteren Ende (51) auf oder in der Verkehrsfläche (52) befestigt sind und im Bereich ihres oberen Endes durch einen Stützbalken (57) nach hinten abgestützt ausgebildet sind, der seinerseits vorzugsweise auf der Verkehrsfläche (52) und/oder an einem Gebäudefundament (54) befestigt ist.

2. Anfahrpuffer nach Anspruch 1, **dadurch gekennzeichnet, dass** der Rammbalken (55) einen Verstellweg aufweist, der sowohl eine horizontale (12) als auch vertikale (13) Stellwegkomponente aufweist, wobei ein aufwärts gerichteter Verstellweg (14) sich vom abwärts gerichteten Verstellweg (15) unterscheidet, indem der aufwärts gerichtete Verstellweg (14) auf mindestens einem Teil des Weges einen größeren Abstand (16) zu einer Montageebene (17) aufweist als der abwärts gerichtete Verstellweg (15).

3. Anfahrpuffer nach Anspruch 2, **dadurch gekennzeichnet, dass** ein Exzenter, vorzugsweise ein Doppelexzenter, zur Erzeugung mindestens eines Teils der horizontalen Stellwegkomponente (12) vorgesehen ist, wobei vorzugsweise der Stellantrieb (11) den Exzenter beim Verlassen der oberen Endlage (37) als erstes betätigend ausgebildet ist.

4. Anfahrpuffer nach Anspruch 2 oder 3, **dadurch gekennzeichnet, dass** ein zweiter Kolben-Zylinder-Antrieb (38) zur Erzeugung mindestens eines Teils der horizontalen Stellwegkomponente (12) vorgesehen ist, wobei vorzugsweise die Steuerung den zweiten Kolben-Zylinder-Antrieb (38) beim Verlassen der oberen Endlage (37) als erstes betätigend ausgebildet ist.

5. Anfahrpuffer nach Anspruch 2, 3 oder 4, **dadurch gekennzeichnet, dass** eine Auflaufkeilkombination (39) zur Erzeugung mindestens eines Teils der horizontalen Stellwegkomponente (12) vorgesehen ist, wobei vorzugsweise der Stellantrieb (11) die Auflaufkeilkombination (39) beim Verlassen der oberen Endlage (37) als erstes betätigend ausgebildet ist.

6. Anfahrpuffer nach Anspruch 2, 3, 4 oder 5, **dadurch gekennzeichnet, dass** eine Parallelogrammführung mit Schubstange zur Erzeugung mindestens eines Teils der horizontalen Stellwegkomponente (12) vorgesehen ist, wobei vorzugsweise der Stellantrieb (11) die Parallelogrammführung mit Schubstange beim Verlassen der oberen Endlage (37) als erstes betätigend ausgebildet ist.

7. Anfahrpuffer nach einem oder mehreren der vorhergegangenen Ansprüche, **dadurch gekennzeichnet, dass** der Montagerahmen (18) feststehend ausgebildet ist und eine Führungsschablone (19) aufweist, an der sich zwei vertikal beanstandete veränderbare Stützflächen (20) einer lageveränderlichen Baugruppe (7) abstützen.

8. Anfahrpuffer nach einem oder mehreren der vorhergegangenen Ansprüche, **dadurch gekennzeichnet, dass** die lageveränderliche Baugruppe (7) aus dem Pufferblock (8) und einem Teil des Linearantriebs (10) gebildet ist, wobei vorzugsweise eine Stützfläche (20) oder beide am Pufferblock (8) angeordnet sind.

9. Anfahrpuffer nach einem oder mehreren der vorhergegangenen Ansprüche, **dadurch gekennzeichnet, dass** der Pufferblock (8) eine Mitnahmeöffnung (21) aufweist, die in vertikaler Richtung größer als in horizontaler Richtung ausgebildet ist und in der ein Mitnahmeelement (22) eingreifend angeordnet ist, das eine Verbindung (25) zum beweglichen Teil (10) des Stellantriebs (11) aufweist.

10. Anfahrpuffer nach einem oder mehreren der vorhergegangenen Ansprüche, **dadurch gekennzeichnet, dass** eine Stützfläche (20) als Drehmomentsstütze (26) einer auf den Pufferblock (8) ausgeübten Anfahrkraft ausgebildet ist.

11. Anfahrpuffer nach einem oder mehreren der vorhergegangenen Ansprüche, **dadurch gekennzeichnet, dass** er eine Stoßfläche (23) aufweist, deren Mittelachse (24) oberhalb der Mitnahmeöffnung (21) angeordnet ist.

12. Anfahrpuffer nach einem oder mehreren der vorhergegangenen Ansprüche, **dadurch gekennzeichnet, dass** der Montagerahmen (18) in einer oberen Endlage des Pufferblockes (8) unterhalb der Mittelachse (24) der Stoßfläche (23) endend ausgebildet ist.

13. Anfahrpuffer nach einem oder mehreren der vorhergegangenen Ansprüche, **dadurch gekennzeichnet, dass** der Antrieb (11) des Anfahrpuffers (1) eine Wirkverbindung zu einer Steuerung aufweist, der das Signal eines Sensors zur Erkennung eines herangefahrenen Fahrzeugs aufgeschaltet ist.

14. Anfahrpuffer nach einem oder mehreren der vorhergegangenen Ansprüche, **dadurch gekennzeichnet, dass** der Kolben-Zylinder-Antrieb (11) des Anfahrpuffers (1) eine Betriebsart aufweist, bei der die beiden Druckräume des Kolben-Zylinder-Antriebs miteinander verbunden sind.

15. Anfahrpuffer nach einem oder mehreren der vorhergegangenen Ansprüche, **dadurch gekennzeichnet, dass** der Anfahrpuffer (1) mindestens einen Lagesensor für die Erfassung der Höhenlage eines Fahrzeugs aufweist, wobei die Lage des Puffers so geregelt ausgebildet ist, dass seine Höhe einer momentanen Höhenlageänderung des Fahrzeugs folgt.

16. Anfahrpuffer nach einem oder mehreren der vorhergegangenen Ansprüche, **dadurch gekennzeichnet, dass** der Lagesensor auf der Grundlage einer optischen Mustererkennung funktionierend ausgebildet ist.

17. Anfahrpuffer nach einem oder mehreren der vorhergegangenen Ansprüche, **dadurch gekennzeichnet, dass** der Abstand der Säulen (50) größer als der Abstand der Anfahrkissen (9) ist, vorzugsweise größer als die doppelte Breite eines LKW (2).

18. Anfahrpuffer nach einem oder mehreren der vorhergegangenen Ansprüche, **dadurch gekennzeichnet, dass** er ein Dichtungsteil, vorzugsweise verstellbares, insbesondere aufblasbares, aufweist, wobei das Dichtungsteil einen Spalt zwischen dem Rammbalken und der Überladebrücke überbrückend ausgebildet ist.

19. Anfahrpuffer nach Anspruch 18, **dadurch gekennzeichnet, dass** das Dichtungsteil in der Aufsicht u-förmig ausgebildet ist und/oder vorzugsweise mit seinen freien Schenkeln in Richtung der Anfahrkissen zeigend ausgebildet ist.

## Claims

1. An approach buffer consisting of an assembly frame and of a buffer block for a loading ramp or a loading gangway, whose buffer block is designed adjustable in height, wherein the buffer block is designed as an essentially horizontal ram beam, **characterised in that** the ram beam is mounted in a height-adjustable manner in the region of its ends on two distanced assembly frames formed as columns, and the columns (50) at their lower end (51) are fastened on or in the travel surface (52) and in the region of their upper end are formed supported to the rear by way of a support beam (57) which for its part is preferably fastened on the travel surface (52) and/or on a building foundation (54).

2. An approach buffer according to claim 1, **characterised in that** the ram beam (55) has a travel path which has a horizontal (12) as well as a vertical travel (13) path component, wherein an upwardly directed travel path (14) differs from the downwardly directed travel path (15) **in that** the upwardly directed travel path (14) on at least a part of the path has a larger distance (16) to an assembly plane (17) than the downwardly directed travel path (15).

3. An approach buffer according to claim 2, **characterised in that** an eccentric, preferably a double eccentric is provided for producing at least a part of the horizontal travel path component (12), wherein preferably the actuator (11) is designed to actuate the eccentric first of all on leaving the upper end position (37).

4. An approach buffer according to claim 2 or 3, **characterised in that** a second piston-cylinder drive (38) for producing at least one part of the horizontal travel path component (12) is provided, wherein preferably the control is designed to actuate the second piston-cylinder drive (38) first of all on leaving the upper end position (37).

5. An approach buffer according to claim 2, 3 or 4, **characterised in that** a ramp wedge combination (39) for producing at least one part of the horizontal travel path component (12) is provided, wherein preferably the actuator (11) is designed to actuate the ramp wedge combination (39) first of all on leaving the upper edge position (37).

6. An approach buffer according to claim 2, 3, 4 or 5, **characterised in that** a parallelogram linkage with a push rod for producing at least a part of the horizontal travel path component (12) is provided, wherein preferably the actuator (11) is designed to actuate the parallelogram linkage with the push rod first of all on leaving the upper end position (37).

7. An approach buffer according to one or more of the preceding claims, **characterised in that** the assembly frame (18) is designed stationary and comprises a guide template (19) on which two vertically distanced, changeable support surfaces (20) of a componentry (7) changeable in position are supported.

8. An approach buffer according to one or more of the preceding claims, **characterised in that** the positionally changeable componentry (7) is formed from the buffer block (8) and a part of the linear drive (10), wherein preferably one support surface (20) or both are arranged on the buffer block (8).

9. An approach buffer according to one or more of the preceding claims, **characterised in that** the buffer block (8) comprises a catch opening (21) which in the vertical direction is designed larger than in the horizontal direction, and in which a catch element (22) is arranged in an engaging manner, which has a connection (25) to the moving part (10) of the actuator (11).

10. An approach buffer according to one or more of the preceding claims, **characterised in that** a support surface (20) is designed as a torque support (26) of an approach force exerted onto the buffer block (8).

11. An approach buffer according to one or more of the preceding claims, **characterised in that** it comprises an abutment surface (23) whose middle axis (24) is arranged above the catch opening (21).

12. An approach buffer according to one or more of the preceding claims, **characterised in that** the assembly frame (18) is formed ending in an upper end position of the buffer block (8) below the middle axis (24) of the abutment surface (23).

13. An approach buffer according to one or more of the preceding claims, **characterised in that** the drive (11) of the approach buffer (1) has an active connection to a control which processes the signal of a sensor for recognizing an approaching vehicle.

14. An approach buffer according to one or ore of the preceding claims, **characterised in that** the piston-cylinder drive (11) of the approach buffer (1) has an operation type with which the two pressure spaces of the piston-cylinder drive are connected to one another.

15. An approach buffer according to one or more of the preceding claims, **characterised in that** the approach buffer (1) comprises at least one position sensor for detecting the height position of a vehicle, wherein the position of the buffer designed in a regulated manner such that its height follows a momentary height position change of the vehicle.

16. An approach buffer according to one or more of the preceding claims, **characterised in that** the position sensor is designed functioning on the basis of an optical pattern recognition.

17. An approach buffer according to one or more of the preceding claims, **characterised in that** the distance of the columns (50) is larger than the distance of the approach cushion (9), is preferably larger than double the width of a lorry (2).

18. An approach buffer according to one or more of the preceding claims, **characterised in that** it comprises a sealing part, preferably an adjustable, in particular inflatable one, wherein the sealing part is designed bridging a gap between the ram bar and the loading gangway.

19. An approach buffer according to claim 18, **characterised in that** the sealing part is designed u-shaped in a plan view and/or preferably designed with its free limbs pointing in the direction of the approach cushion.

## Revendications

1. Butoir de manoeuvre pour un quai de chargement ou un pont de transbordement, comportant un bâti de montage et un bloc butoir et dont le bloc butoir est réglable en hauteur, le bloc butoir étant réalisé sous la forme d'une palplanche sensiblement horizontale, **caractérisé en ce que** la palplanche est montée réglable en hauteur dans la zone de ses extrémités contre les deux bâtis de montage écartés l'un de l'autre et réalisés sous forme de montants, et les montants (50), au niveau de leur extrémité inférieure (51), sont fixés sur ou dans la surface de roulement (52) et, dans la zone de leur extrémité supérieure, sont supportés par l'arrière par une poutre support (57), qui est fixée, pour sa part, de préférence sur la surface de roulement (52) et/ou contre une fondation du bâtiment (54).

2. Butoir de manoeuvre selon la revendication 1, **caractérisé en ce que** la palplanche (55) a une trajectoire de déplacement qui possède une composante de déplacement horizontale (12), de même qu'une composante de déplacement verticale (13), une trajectoire de déplacement (14) dirigée vers le haut se différenciant d'une trajectoire de déplacement (15) dirigée vers le bas, par le fait que la trajectoire de déplacement (14) dirigée vers le haut, sur au moins une partie de sa trajectoire, est située à une plus grande distance (16) du plan de montage (17) que la trajectoire de déplacement (15) dirigée vers le bas.

3. Butoir de manoeuvre selon la revendication 2, **caractérisé en ce qu'**il est prévu un mécanisme d'excentrique, de préférence un mécanisme à double excentrique pour développer au moins une partie de la composante de déplacement horizontale (12), le mécanisme de commande (11) étant réalisé de préférence pour actionner en premier le mécanisme d'excentrique au moment du départ hors de la position finale supérieure (37).

4. Butoir de manoeuvre selon la revendication 2 ou 3, **caractérisé en ce qu'**il est prévu un deuxième mécanisme à piston et cylindre (38) pour développer au moins une partie de la composante de déplacement horizontale (12), le mécanisme de commande étant réalisé de préférence pour actionner en premier le deuxième mécanisme à piston et cylindre (38) au moment du départ hors de la position finale supérieure (37).

5. Butoir de manoeuvre selon la revendication 2, 3 ou 4, **caractérisé en ce qu'**il est prévu une combinaison de cales (39) pour développer au moins une partie de la composante de déplacement horizontale (12), le mécanisme de commande (11) étant réalisé de préférence pour actionner en premier la combinaison de cales (39) au moment du départ hors de la position finale supérieure (37).

6. Butoir de manoeuvre selon la revendication 2, 3, 4 ou 5, **caractérisé en ce qu'**il est prévu un parallélogramme articulé avec une tige de poussée pour développer au moins une partie de la composante de déplacement horizontale (12), le mécanisme de commande (11) étant réalisé de préférence pour actionner en premier le parallélogramme articulé avec tige de poussée au moment du départ hors de la position finale supérieure (37).

7. Butoir de manoeuvre selon une ou plusieurs des revendications précédentes, **caractérisé en ce que** le bâti de montage (18) est réalisé fixe et comporte un gabarit de guidage (19), sur lequel viennent en appui deux surfaces d'appui (20), à écartement vertical réglable, d'un groupe (7) à position réglable.

8. Butoir de manoeuvre selon une ou plusieurs des revendications précédentes, **caractérisé en ce que** le groupe (7) à position réglable est formé par le bloc butoir (8) et une partie de l'actionneur linéaire (10), sachant que, de préférence, une surface d'appui (20) ou les deux sont agencées sur le bloc butoir (8).

9. Butoir de manoeuvre selon une ou plusieurs des revendications précédentes, **caractérisé en ce que** le bloc butoir (8) comporte un orifice d'entraînement (21), qui est plus grand dans le sens vertical que dans le sens horizontal et dans lequel est engagé un élément d'entraînement (22) qui comporte une liaison (25) avec la partie mobile (10) du mécanisme de commande (11).

10. Butoir de manoeuvre selon une ou plusieurs des revendications précédentes, **caractérisé en ce qu'**une surface d'appui (20) est conçue sous forme de support de couple de rotation (26) d'une force d'accostage exercée sur le bloc butoir (8).

11. Butoir de manoeuvre selon une ou plusieurs des revendications précédentes, **caractérisé en ce qu'**il comporte une surface de butée (23) dont l'axe médian (24) est situé au-dessus de l'orifice d'entraînement (21).

12. Butoir de manoeuvre selon une ou plusieurs des revendications précédentes, **caractérisé en ce que** le bâti de montage (18) est réalisé de manière à se terminer en dessous de l'axe médian (24) de la surface de butée (23) dans une position finale supérieure du bloc butoir (8).

13. Butoir de manoeuvre selon une ou plusieurs des revendications précédentes, **caractérisé en ce que** le mécanisme de commande (11) du butoir de manoeuvre (1) comporte une liaison active avec une commande qui reçoit le signal d'un capteur destiné à détecter l'approche d'un véhicule manoeuvrant en recul.

14. Butoir de manoeuvre selon une ou plusieurs des revendications précédentes, **caractérisé en ce que** le mécanisme à piston et cylindre (11) du butoir de manoeuvre (1) possède un mode de fonctionnement, dans lequel les deux chambres de pression du mécanisme à piston et cylindre communiquent l'une avec l'autre.

15. Butoir de manoeuvre selon une ou plusieurs des revendications précédentes, **caractérisé en ce que** le butoir de manoeuvre (1) comporte au moins un capteur de position pour détecter la position en hauteur d'un véhicule, la position du butoir étant réglée de telle sorte que sa hauteur suit une variation de hauteur actuelle du véhicule.

16. Butoir de manoeuvre selon une ou plusieurs des revendications précédentes, **caractérisé en ce que** le capteur de position est réalisé pour fonctionner sur la base d'une détection de modèle par voie optique.

17. Butoir de manoeuvre selon une ou plusieurs des revendications précédentes, **caractérisé en ce que** la distance entre les montants (50) est supérieure à la distance entre les coussins d'accostage (9), de préférence supérieure à la double largeur d'un camion (2).

18. Butoir de manoeuvre selon une ou plusieurs des revendications précédentes, **caractérisé en ce qu'**il comporte un élément d'étanchéité, de préférence réglable, en particulier gonflable, l'élément d'étanchéité étant réalisé pour couvrir une fente entre la palplanche et le pont de transbordement.

19. Butoir de manoeuvre selon la revendication 18, **caractérisé en ce que** l'élément d'étanchéité est réalisé en forme de U par référence à une vue en élévation et/ou est réalisé de préférence avec ses deux branches libres dirigées vers les coussins d'accostage.
